# EUROPEAN PATENT SPECIFICATION

(11) **EP 4 025 103 B1**
(45) Date of publication and mention of the grant of the patent: **29.11.2023**
(21) Application number: 20789496.5
(22) Date of filing: 30.09.2020
(51) Int. Cl.: A47J 31/44

(54) **A MACHINE FOR PREPARING BEVERAGES COMPRISING A SENSORISED ACCESSORY WITH RF TRANSMISSION OF THE VALUE MEASURED OF THE TEMPERATURE OF A LIQUID IN A CONTAINER**
MASCHINE ZUM ZUBEREITEN VON GETRÄNKEN MIT EINEM SENSORISIERTEN ZUBEHÖR MIT HF-ÜBERTRAGUNG DES MESSWERTS DER TEMPERATUR EINER FLÜSSIGKEIT IN EINEM BEHÄLTER
MACHINE DE PRÉPARATION DE BOISSONS COMPRENANT UN ACCESSOIRE SENSORIEL AVEC TRANSMISSION RF DE LA VALEUR MESURÉE DE TEMPÉRATURE D'UN LIQUIDE DANS UN RÉCIPIENT

(30) Priority: 16.10.2019 IT 201900019064
(43) Date of publication of application: 13.07.2022
(73) Proprietor: De'Longhi Appliances S.r.l., 31100 Treviso (IT)
(72) Inventor: EVANGELISTI, Paolo, 31100 Treviso (IT); ACCIARI, Alberto, 31100 Treviso (IT); PIOVAN, Nicola, 31100 Treviso (IT)
(74) Representative: Rapisardi, Mariacristina
(86) International application number: PCT/EP2020/077392
(87) International publication number: WO 2021/073875

(56) References cited:
- EP-A1- 3 628 194
- WO-A1-2010/121299
- US-A1- 2016 034 907

## Description

The present invention relates to a machine for preparing beverages comprising a front wall, a rest base for containers positioned in front of the front wall and a temperature detection probe immersible in a comestible liquid contained in a container positioned on the rest base, where the front wall has a beverage dispenser and a steam dispenser positioned above the rest base for containers of the containers and supports a first antenna, and the temperature probe comprises a second antenna interacting with the first antenna for wireless transmission of the temperature detected of the liquid in the container.

The market has for many years offered machines for the preparation of beverages, typically coffee machines, which have sensors for detecting the temperature of liquids used for making and/or infusion of the beverage.

It is known that the detection of the temperature of liquids is of very great importance for the preparation of beverages and/or infusions.

Coffee machines (WO2018/2013866) are known having temperature sensors that rest on outer walls of containers: these sensors are notoriously poorly efficient, as they carry out indirect and approximate measurements of the temperature of the liquid contained.

Also known are coffee machines (EP2584906, EP1776905) having temperature sensors which carry out a direct and therefore precise measurement of the liquid in the container, but these have complex mechanical systems for managing the temperature reading wand and the relative sensor cable inside the wand.

Document WO 2010/121299 A1 discloses a machine for preparing beverages comprising a front wall, a rest base for containers positioned in front of said front wall and a temperature detection probe immersible in a comestible liquid contained in a container positioned on said rest base, said front wall having a beverage dispenser and a steam dispenser positioned above said rest base for containers.

There is therefore a widely felt need to simplify the structure of coffee machines with known sensors for detecting the temperature of liquids used for making and/or infusion of the beverage.

The technical task of the present invention is, therefore, to realise a machine for preparing beverages, typically a coffee machine with a sensor for detecting the temperature of liquids used for making and/or infusion of the beverage which enables obviating the technical disadvantages comprised in the prior art.

Within the context of this technical task an object of the invention is to realise a coffee machine with a sensor for detecting the temperature of liquids used for making and/or infusion of the beverage which enables reading the temperature of the liquid both in the cold container and during the preparation, as well as following the preparation of the beverage. A further aim of the invention is to realise a coffee machine with a sensor for detecting the temperature of liquids used for making and/or infusion of the beverage which acquires the temperature automatically.

A further aim of the invention is to realise a sensor which operates with a low energy consumption to detect the temperature of liquids used for making and/or infusion of the beverage.

The technical task, as well as these and other aims, according to the present invention, are attained with a machine for preparing beverages, typically a coffee machine, as defined in claim 1.

Other characteristics of the present invention are also defined in the following claims.

Further characteristics and advantages of the invention will become more apparent from the description of a preferred, but not exclusive, embodiment of a machine for preparing beverages, typically a coffee machine, comprising a sensor for detecting the temperature of liquids used for making and/or infusion of the beverage according to the invention, illustrated by way of indicative and nonlimiting example in the accompanying drawings, in which:

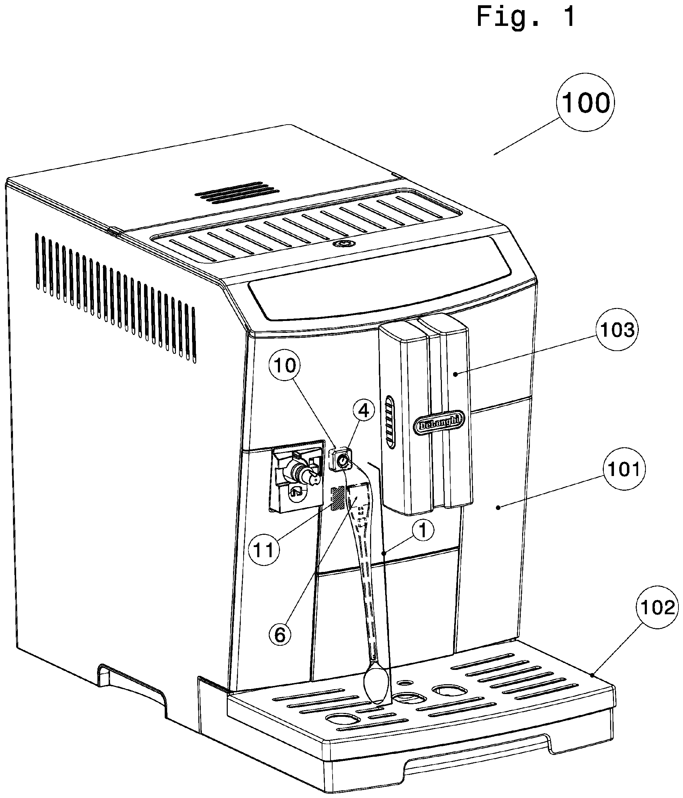

figure 1 illustrates a coffee machine with a temperature detection probe;

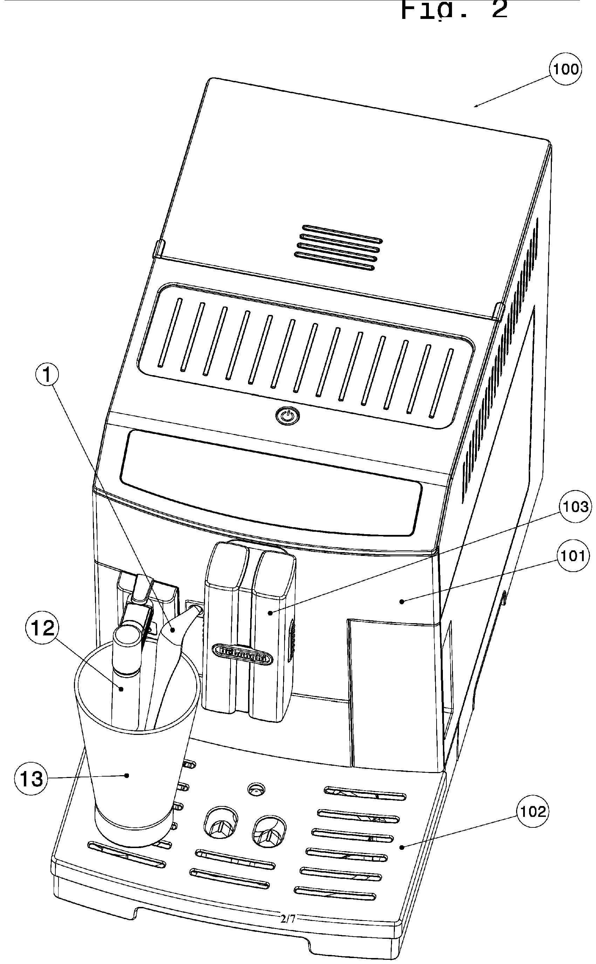

figure 2 illustrates a coffee machine with a temperature detection probe and a steam wand positioned in a container of liquids, in particular a cup for milk;
figure 3 illustrates a coffee machine with a temperature detection probe, a coffee dispenser and a milk dispenser positioned in a container of liquids, in particular a cup for cappuccino or caffelatte;

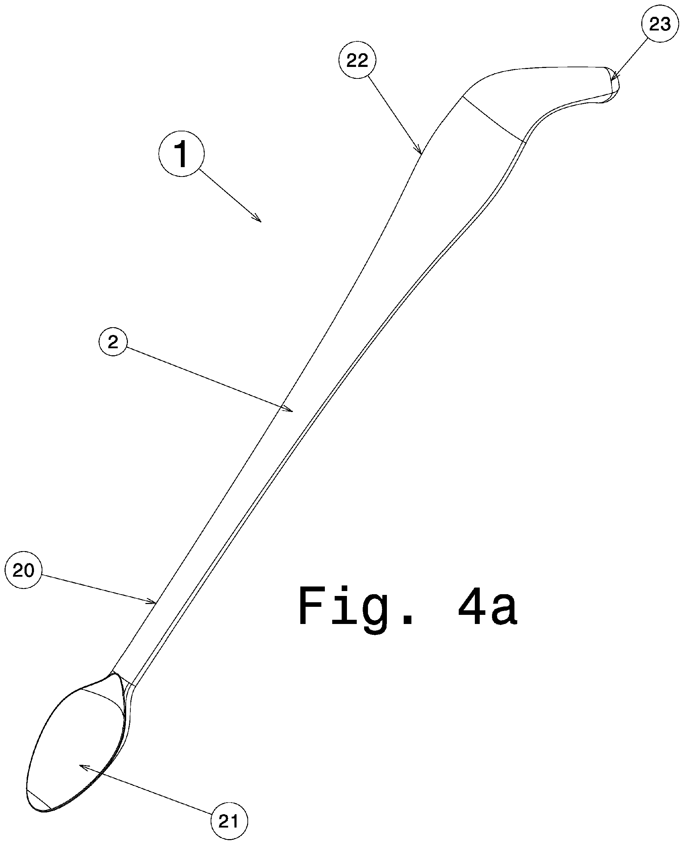

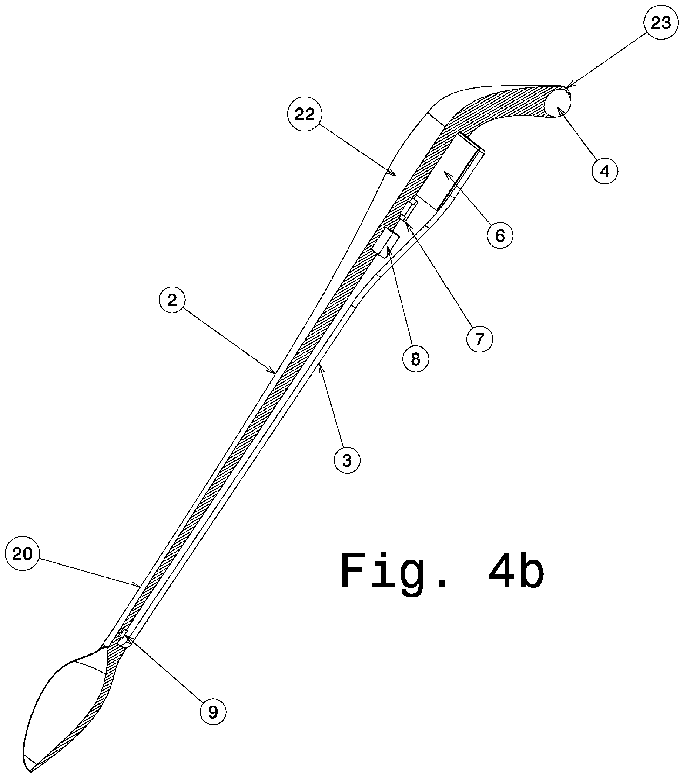

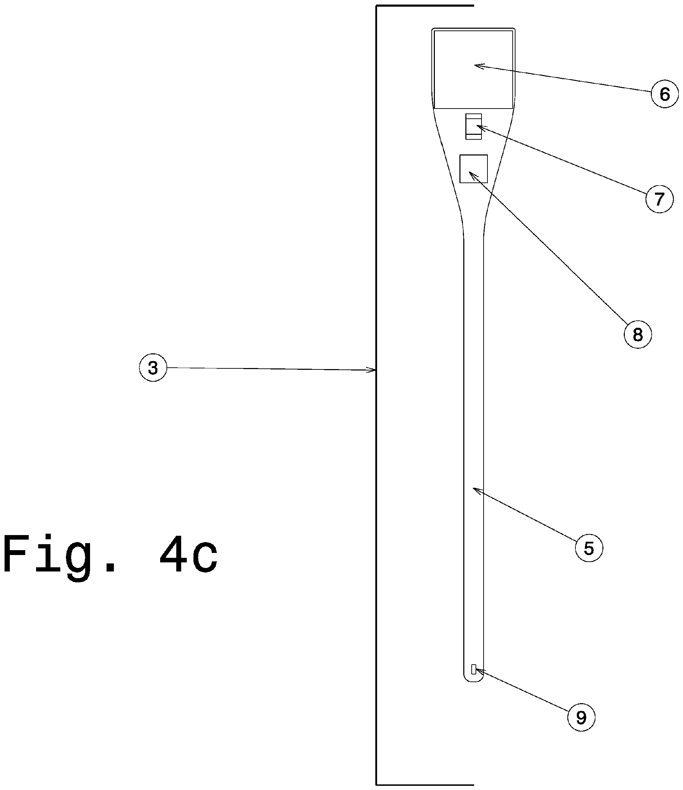

figures 4a and 4b illustrate a view and a section of the temperature detection probe, while figure 4c is a view of the electronic board incorporated in the temperature detection probe;
figure 5 shows a lateral elevation view of a the- coffee machine equipped with a temperature probe not according to the invention, having an upper end profiled so as to hook the upper edge of the cup.

With reference to the appended figures, a coffee machine is shown with a temperature detection probe, indicated in its entirety by reference number 100.

The coffee machine 100 has a front wall 101, a rest base for containers 102 positioned in front of the front wall 101 and a temperature detection probe 1 immersible in a comestible liquid contained in a container 13 positioned on said rest base 102.

The front wall 101 has a beverage dispenser 103, especially of coffee, and a steam dispenser 12 positioned above the rest base for containers 102.

The front wall 101 supports a first antenna 11 on the machine side, and the temperature probe 1 comprises a second antenna 6 interacting with the first antenna 11 for wireless transmission, typically using RFID technology, of the temperature detected of the liquid in the container 13.

The temperature probe 1 comprises a longitudinal body 2 which incorporates a temperature sensor 9, a microprocessor 8 and a passive transponder 7 including the second antenna 6 with technology typically of an RFID type.

The coffee machine 100 is equipped with a power supply board (not shown in the drawings) for the passive transponder 7.

The longitudinal body 2 of the temperature probe 1 has a lower portion 20 including the lower end 21, and an upper portion 22 including the upper end 23. The temperature sensor 9 is positioned at the lower portion 20 and the second antenna 6 is positioned at the upper portion 22.

The longitudinal body 2 further has support means 4 of the temperature probe 1 engageable with the front wall 101.

The support means 4 are advantageously positioned at the upper end 23 of the upper portion 22 and are magnetic or mechanical.

In the illustrated case, the support means 4 disengageably hook manually to the front wall 101 at a fixed magnetic coupling 10.

The magnetic support means 4 of the temperature probe 1 advantageously have a convex spherical shape and the fixed magnetic coupling 10 on the front wall 101 has a complementary concave spherical shape.

When the probe 1 is in use, the support means 4 advantageously positions the second antenna 6 outside the container 13 and facing in front of the first antenna 11.

The first antenna 11 is positioned at a greater height than the tallest height of the container 13 positionable on the container rest base 102, beneath the beverage dispenser 103.

The first antenna 11 is further interposed between the beverage dispenser 103 and the steam dispenser 12.

The adjacent arrangement of the two antennas 6, 11 without interposed barriers enables limitation, to an indispensable minimum, of the transmission power of the antennas and therefore also of the energy that the second antenna 6 has to transfer to the first antenna 11 for the power supply to the temperature detection probe 1. The temperature sensor 9 is positioned at the lower portion 20 of the longitudinal body 2, but in a longitudinally retracted position with respect to the lower end 21, advantageously configured as a tool, for example a coffee spoon.

The microprocessor 8 and the passive transponder 7 and the second antenna 6 are positioned at the upper portion 22, but in a longitudinally retracted position with respect to the upper end 23.

The temperature sensor 9, the microprocessor 8 and the passive transponder 7 and the second antenna 6 in the longitudinal body 2 are supported by a printed interconnection circuit 5, together constituting the electronic board 3, advantageously made of a flexible material.

The electronic board 3 is sealed inside the longitudinal body 2 of the temperature probe 1, advantageously made of a plastically deformable flexible material.

The functioning of a machine for preparing beverages, typically a coffee machine, according to the invention is obvious from what is described and illustrated, and, in particular, is substantially as follows.

When the machine is switched on, the detection and reading system of the temperature - among others - is activated by the temperature sensor 9 inside the temperature probe 1.

The temperature probe 1 is disengageably hooked, via the magnetic support means 4, to the fixed magnetic coupling 10: the complementary spherical convex shape of the support means 4 and the spherical concave shape of the fixed magnetic coupling 10 advantageously enable manual relative rotation of the temperature probe engaged on the front wall 101 of the machine, and facilitate easy insertion thereof into the container 13 positioned on the rest base 102, i.e. in the liquid contained therein.

When the probe 1 is thus positioned and in use, the support means 4 engaged in the fixed magnetic coupling 10 positions the second antenna 6 outside the container 13 and facing the first antenna 11.

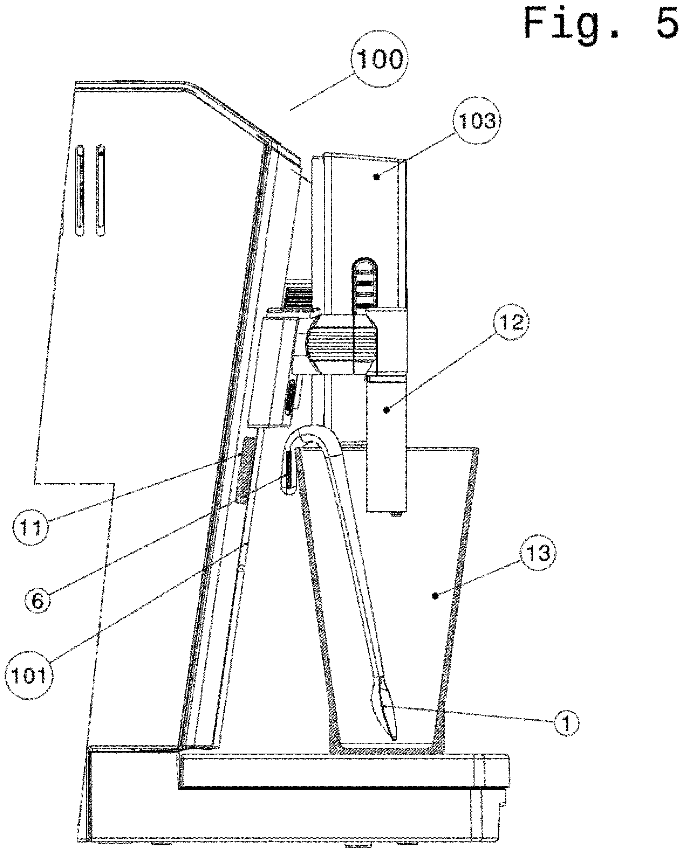

Not according to the invention, the longitudinal body 2 of the temperature probe 1, made of a flexible material that is plastically deformable, can be manually deformed in the upper portion 22 and, once bent into a hook shape, can be freely hooked on the edge of the container 13 and inserted inside the container 13, i.e. in the liquid contained therein, as shown in figure 5.

The appropriately dimensioned RFID transmission technology and the in any case modest relative distances in all cases ensure the exchange of information between the probe 1 and the machine body 100 via the respective second antenna 6 and the first antenna 11.

The temperature sensor 9 is advantageously positioned at the lower portion 20 of the longitudinal body 2, but in a longitudinally retracted position from the lower end 21, advantageously configured as a tool for other obvious purposes, not described herein, thus guaranteeing the detection of the temperature in the body of the liquid in the container 13 and not on the bottom or wall of the container itself, where the reading might be altered.

The temperature detected by the temperature sensor 9 is, via the microprocessor 8, the transponder 7 and the second antenna 6 configured on the electronic board 3 sealed inside the longitudinal body 2 of the temperature probe 1, transmitted wirelessly with RFID technology to the first antenna 11 positioned on the front wall 101: the signal is then processed by appropriate processing means inside the machine body 100 and the consequent instructions are sent from the control means to the production means and the dispensing means of the machine 100, not illustrated herein.

By way of example, by inserting the probe 1 into the liquid present in the container 13, a temperature detection is carried out as well as a check that the temperature is within the expected range for making the beverage according to predefined characteristics; in the event of a non-conforming reading, by way of example, dispensing of the beverage can be advised against, or the production cycle and/or the dispensing of the beverage can be differently regulated.

In a case where a temperature of a liquid in the container 13 is detected, for example frothed milk mounted using a steam dispensing wand 12, or equivalent means, the processing, control and production means, by organically interacting, bring the milk temperature to the programmed temperature.

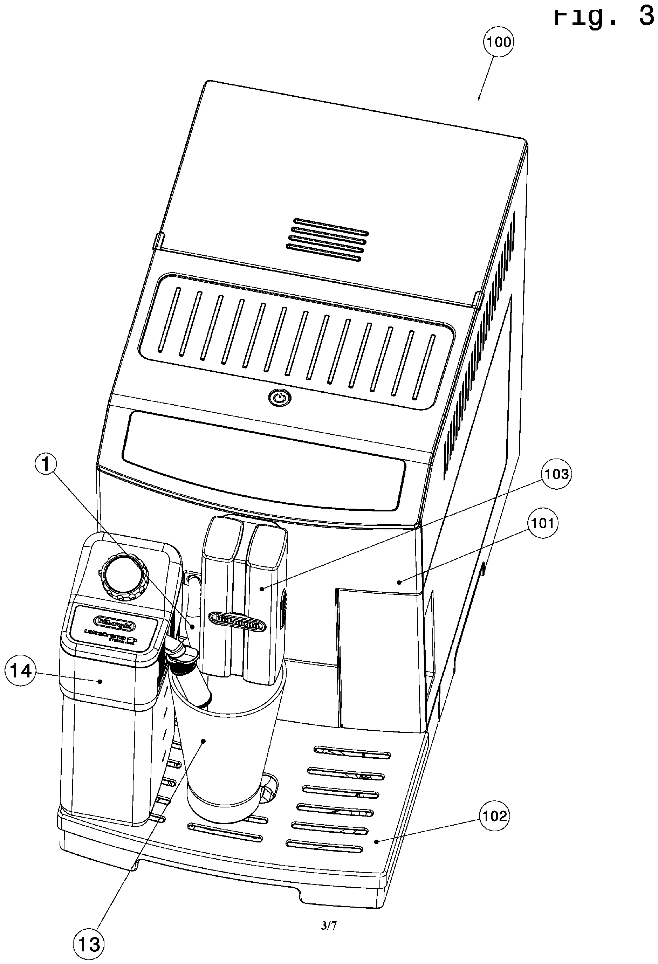

As shown in figure 3, it is advantageously possible to insert the probe 1 in the liquid dispensed by the beverage dispenser 103 into the container 13 and by detecting the temperature of the liquid dispensed it is possible to adequately intervene on the production means and dispensing means thereof.

The acquisition of the temperatures of the dispensed liquids, which is automatically recordable by the processing means, can be used both for a self-diagnosis of the production machine 100 and for learning and memorisation for a particular preparation, for example with new and different qualities of infusions.

It has been practically established how a machine for preparing beverages according to the invention is particularly advantageous for the simple and immediate detection of the temperature of a liquid in a container housed on a base thereof, both before and during and after making the beverage, by acquiring the information automatically and transmitting the information to the machine body using RFID type wireless technology, therefore without cables, thus enabling, through the memorisation and processing of the information on the temperature, control and management of the production means of the beverage.

Naturally, modifications and variants of a machine for preparing beverages as described above are possible, all falling within the scope of the claims.

## Claims

1. A machine for preparing beverages (100) comprising a front wall (101), a rest base for containers (102) positioned in front of said front wall (101) and a temperature detection probe (1) immersible in a comestible liquid contained in a container (13) positioned on said rest base (102), said front wall (101) having a beverage dispenser (103) and a steam dispenser (12) positioned above said rest base for containers (102), wherein said front wall (101) supports a first antenna (11) and said temperature detection probe (1) comprises a second antenna (6) interacting with said first antenna (11) for wireless transmission of the detected temperature of the liquid in the container, said temperature detection probe (1) comprising a longitudinal body (2) which incorporates a temperature sensor (9), a microprocessor (8) and a passive transponder (7) including said second antenna (6), said longitudinal body (2) having magnetic or mechanical support means (4) for supporting said temperature detection probe (1) engageable with said front wall (101), said support means (4) disengageably hooking manually to said front wall (101), said support means (4) being configured to position said second antenna (6) outside said container (13) and facing said first antenna (11) when said_temperature detection probe (1) is in use.

2. The machine for preparing beverages (100) according to the preceding claim, **characterised in that** said temperature sensor (9), said microprocessor (8) and said passive transponder (7) including said second antenna (6) are supported by a printed interconnection circuit (5).

3. The machine for preparing beverages (100) according to the previous claim, **characterised in that** said printed interconnection circuit (5), said temperature sensor (9), said microprocessor (8) and said passive transponder (7) are sealed inside said longitudinal body (2).

4. The machine for preparing beverages (100) according to the preceding claim, **characterised in that** said longitudinal body (2) of said temperature detection probe (1) is made of a flexible material that is plastically deformable.

5. The machine for preparing beverages (100) according to the preceding claim, **characterised in that** said printed interconnection circuit (5) is made of a flexible material that is plastically deformable.

6. The machine for preparing beverages (100) according to any one of previous claims, **characterised in that** said longitudinal body (2) has a lower end (21) and an upper end (23), a lower portion (20) including said lower end (21), and an upper portion (22) including said upper end (23), said temperature sensor (9) being positioned at said lower portion (20) and said second antenna (6) being positioned at said upper portion (22).

7. The machine for preparing beverages (100) according to any one preceding claim, **characterised in that** said first antenna (11) is in an interposed position between said beverage dispenser (103) and said steam dispenser (12).

8. The machine for preparing beverages (100) according to claim 6, **characterised in that** said temperature sensor (9) is in a longitudinally retracted position from said lower end (21).

9. The machine for preparing beverages (100) according to the preceding claim, **characterised in that** at said lower end (21), said longitudinal body (2) has a tool configuration.

10. The machine for preparing beverages (100) according to any one preceding claim, **characterised in that** said first antenna (11) is positioned at a greater height than the tallest container (13) positionable on said rest base for cups (102), beneath said beverage dispenser (103).

## Patentansprüche

1. Eine Maschine zur Zubereitung von Getränken (100) umfasst eine Vorderwand (101), eine Ablagebasis für Behälter (102), die sich vor der Vorderwand (101) befindet, und eine Temperaturerkennungssonde (1), die in einer verzehrbaren Flüssigkeit, die in einem Behälter (13) auf der Ablagebasis (102) positioniert ist, eintauchbar ist. Die Vorderwand (101) verfügt über einen Getränkespender (103) und einen Dampfspender (12), der sich über der Ablagebasis für Behälter (102) befindet. Die Vorderwand (101) trägt eine erste Antenne (11), und die Temperaturerkennungssonde (1) umfasst eine zweite Antenne (6), die mit der ersten Antenne (11) für die drahtlose Übertragung der erkannten Temperatur der Flüssigkeit im Behälter interagiert. Die Temperaturerkennungssonde (1) umfasst einen länglichen Körper (2), der einen Temperatursensor (9), einen Mikroprozessor (8) und einen passiven Transponder (7) einschließlich der zweiten Antenne (6) enthält. Der längliche Körper (2) weist magnetische oder mechanische Stützmittel (4) auf, um die Temperaturerkennungssonde (1) an der Vorderwand (101) zu tragen, wobei die Stützmittel (4) manuell an die Vorderwand (101) einhaken und sich lösen können. Die Stützmittel (4) sind so konfiguriert, dass sie die zweite Antenne (6) außerhalb des Behälters (13) positionieren und auf die erste Antenne (11) ausrichten, wenn die Temperaturerkennungssonde (1) in Betrieb ist.

2. Die Maschine zur Zubereitung von Getränken (100) gemäß der vorherigen Behauptung ist **dadurch gekennzeichnet, dass** der Temperatursensor (9), der Mikroprozessor (8) und der passive Transponder (7) einschließlich der zweiten Antenne (6) von einer gedruckten Verbindungsplatine (5) unterstützt werden.

3. . Die Maschine zur Zubereitung von Getränken (100) gemäß der vorherigen Behauptung ist **dadurch gekennzeichnet, dass** die gedruckte Verbindungsplatine (5), der Temperatursensor (9), der Mikroprozessor (8) und der passive Transponder (7) im Inneren des länglichen Körpers (2) versiegelt sind.

4. Die Maschine zur Zubereitung von Getränken (100) gemäß der vorherigen Behauptung ist **dadurch gekennzeichnet, dass** der längliche Körper (2) der Temperaturerkennungssonde (1) aus einem flexiblen Material besteht, das plastisch verformbar ist.

5. Die Maschine zur Zubereitung von Getränken (100) gemäß der vorherigen Behauptung ist **dadurch gekennzeichnet, dass** die gedruckte Verbindungsplatine (5) aus einem flexiblen Material besteht, das plastisch verformbar ist.

6. Die Maschine zur Zubereitung von Getränken (100) gemäß einer der vorherigen Behauptungen zeichnet sich dadurch aus, dass der längliche Körper (2) ein unteres Ende (21) und ein oberes Ende (23), einen unteren Abschnitt (20) einschließlich des unteren Endes (21) und einen oberen Abschnitt (22) einschließlich des oberen Endes (23) aufweist, wobei der Temperatursensor (9) sich im unteren Abschnitt (20) und die zweite Antenne (6) sich im oberen Abschnitt (22) befinden.

7. Die Maschine zur Zubereitung von Getränken (100) gemäß einer der vorherigen Behauptungen zeichnet sich dadurch aus, dass die erste Antenne (11) in einer dazwischengeschalteten Position zwischen dem Getränkespender (103) und dem Dampfspender (12) angeordnet ist.

8. Die Maschine zur Zubereitung von Getränken (100) gemäß Anspruch 6, **gekennzeichnet dadurch, dass** der Temperatursensor (9) sich in einer längs zurückgezogenen Position von dem unteren Ende (21) befindet.

9. Die Maschine zur Zubereitung von Getränken (100) gemäß dem vorherigen Anspruch, **gekennzeichnet dadurch, dass** an dem unteren Ende (21) der längliche Körper (2) eine Werkzeugkonfiguration aufweist.

10. Die Maschine zur Zubereitung von Getränken (100) gemäß einem der vorhergehenden Ansprüche zeichnet sich dadurch aus, dass die erste Antenne (11) in einer höheren Position als der höchste Behälter (13) positioniert ist, auf der Ablagebasis für Behälter (102) unter dem Getränkespender (103) platziert werden kann.

## Revendications

1. Une machine pour la préparation de boissons (100) comprenant une paroi avant (101), une base de repos pour des récipients (102) positionnée devant ladite paroi avant (101) et une sonde de détection de température (1) immergée dans un liquide comestible contenu dans un récipient (13) positionné sur ladite base de repos des récipients (102), ladite paroi avant (101) ayant un distributeur de boissons (103) et un distributeur de vapeur (12) positionné au-dessus de ladite base de repos pour les récipients (102), ladite paroi avant (101) supportant une première antenne (11) et ladite sonde de détection de température (1) comprenant une deuxième antenne (6) interagissant avec ladite première antenne (11) pour la transmission sans fil de la température détectée du liquide dans le récipient, ladite sonde de détection de température (1) comprenant un corps longitudinal (2) qui intègre un capteur de température (9), un microprocesseur (8) et un transpondeur passif (7) comprenant ladite deuxième antenne (6), ledit corps longitudinal (2) ayant des moyens de support magnétiques ou mécaniques (4) pour soutenir ladite sonde de détection de température (1) pouvant être encliquetée manuellement sur ladite paroi avant (101), lesdits moyens de support (4) étant configurés pour positionner ladite deuxième antenne (6) à l'extérieur dudit récipient (13) et en face de ladite première antenne (11) lorsque ladite sonde de détection de température (1) est en cours d'utilisation.

2. La machine pour la préparation de boissons (100) selon la revendication précédente, **caractérisée en ce que** ledit capteur de température (9), ledit microprocesseur (8) et ledit transpondeur passif (7) comprenant ladite deuxième antenne (6) sont pris en charge par un circuit d'interconnexion imprimé (5).

3. La machine pour la préparation de boissons (100) selon la revendication précédente, **caractérisée en ce que** ledit circuit d'interconnexion imprimé (5), ledit capteur de température (9), ledit microprocesseur (8) et ledit transpondeur passif (7) sont scellés à l'intérieur dudit corps longitudinal (2).

4. La machine pour préparer des boissons (100) selon la revendication précédente, **caractérisée en ce que** ledit corps longitudinal (2) de ladite sonde de détection de température (1) est fabriqué en un matériau souple qui est déformable de manière plastique.

5. La machine pour préparer des boissons (100) selon la revendication précédente, **caractérisée en ce que** ledit circuit d'interconnexion imprimé (5) est fabriqué en un matériau souple qui est déformable de manière plastique.

6. La machine pour préparer des boissons (100) selon l'une quelconque des revendications précédentes, **caractérisée en ce que** ledit corps longitudinal (2) comporte une extrémité inférieure (21) et une extrémité supérieure (23), une partie inférieure (20) comprenant ladite extrémité inférieure (21), et une partie supérieure (22) comprenant ladite extrémité supérieure (23), ledit capteur de température (9) étant positionné au niveau de ladite partie inférieure (20) et ladite deuxième antenne (6) étant positionnée au niveau de ladite partie supérieure (22).

7. La machine pour préparer des boissons (100) selon l'une quelconque des revendications précédentes, **caractérisée en ce que** ladite première antenne (11) est dans une position interposée entre ledit distributeur de boissons (103) et ledit distributeur de vapeur (12).

8. La machine pour préparer des boissons (100) selon la revendication 6, **caractérisée en ce que** ledit capteur de température (9) est en position longitudinalement rétractée par rapport à ladite extrémité inférieure (21).

9. La machine pour préparer des boissons (100) selon la revendication précédente, **caractérisée en ce que**, à ladite extrémité inférieure (21), ledit corps longitudinal (2) présente une configuration d'outil.

10. La machine pour préparer des boissons (100) selon l'une quelconque des revendications précédentes, **caractérisée en ce que** ladite première antenne (11) est positionnée à une hauteur supérieure à celle du récipient le plus haut (13) pouvant être placé sur ladite base de repos pour des récipients (102), sous ledit distributeur de boissons (103).
